# EUROPEAN PATENT SPECIFICATION

(11) **EP 3 282 093 B1**
(45) Date of publication and mention of the grant of the patent: **23.12.2020**
(21) Application number: 17185169.4
(22) Date of filing: 07.08.2017
(51) Int. Cl.: F01D 15/10, F02C 7/32, F02C 3/107, F02C 7/275

(54) **GEARED TURBOFAN WITH LOW SPOOL POWER EXTRACTION**
GETRIEBETURBOLÜFTER MIT NIEDERDRUCKLEISTUNGSEXTRAKTION
TURBORÉACTEUR À ENGRENAGES AVEC PRELEVEMENT DE PUISSANCE DU CORPS BASSE PRESSION

(30) Priority: 09.08.2016 US 201615232101
(43) Date of publication of application: 14.02.2018
(73) Proprietor: United Technologies Corporation, Farmington, CT 06032 (US)
(72) Inventor: SHERIDAN, William G., Southington, CT Connecticut 06489 (US); SUCIU, Gabriel L., Glastonbury, CT Connecticut 06033 (US); McCUNE, Michael E., Colchester, CT Connecticut 06415 (US)
(74) Representative: Dehns

(56) References cited:
- EP-A1- 3 032 074
- WO-A1-2008/082335
- FR-A1- 2 921 423
- US-A1- 2011 101 693
- US-A1- 2016 222 975

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-energy exhaust gas flow expands through the turbine section to drive the compressor and the fan section. The compressor section typically includes low and high pressure compressors, and the turbine section includes low and high pressure turbines.

The high pressure turbine drives the high pressure compressor through an outer shaft to form a high spool, and the low pressure turbine drives the low pressure compressor through an inner shaft to form a low spool. The fan section may also be driven by the low inner shaft. A direct drive gas turbine engine includes a fan section driven by the low spool such that the low pressure compressor, low pressure turbine and fan section rotate at a common speed in a common direction.

The engine is typically started by driving the high spool through a tower shaft with an electric motor. Once the high spool is up to speed, the low spool follows and the engine is brought to an idle condition. When the engine is operating, the electric motor is driven through the same tower shaft to generate electric power. The tower shaft driven by the high spool may also drive an accessory gear box. The loads placed on the high spool can decrease overall engine efficiency.

Turbine engine manufacturers continue to seek further improvements to engine performance including improvements to thermal, transfer and propulsive efficiencies.

FR 2 921 423 A1 discloses a turbofan engine, EP 3 032 074 A1 discloses a dual tower shaft gearbox for a gas turbine engine, US 2016/222975 A1 discloses a dual direction windmill pump for a geared turbofan engine, WO 2008/082335 A1 discloses a power transmission device for a gas turbine engine, and US 2011/101693 A1 discloses a gas turbine engine with two tower shafts and respective clutches connected to a starter/generator through two different gear trains.

### SUMMARY

According to a first aspect, there is provided a geared turbofan engine as set forth in claim 1.

There is also provided a method as set forth in claim 6. Embodiments of the disclosure are set forth in the dependent claims.

### BRIEF DESCRIPTION OF THE DRAWINGS

Figure 1 is a schematic view of an example gas turbine engine.
Figure 2 is a schematic view of an example accessory gear box embodiment.
Figure 3 is a schematic view of the example accessory gear box and tower shafts.
Figure 4 is a schematic view of accessory gear box operation during a starting process.
Figure 5 is a schematic view of accessory gear box operation during engine operation.

### DETAILED DESCRIPTION

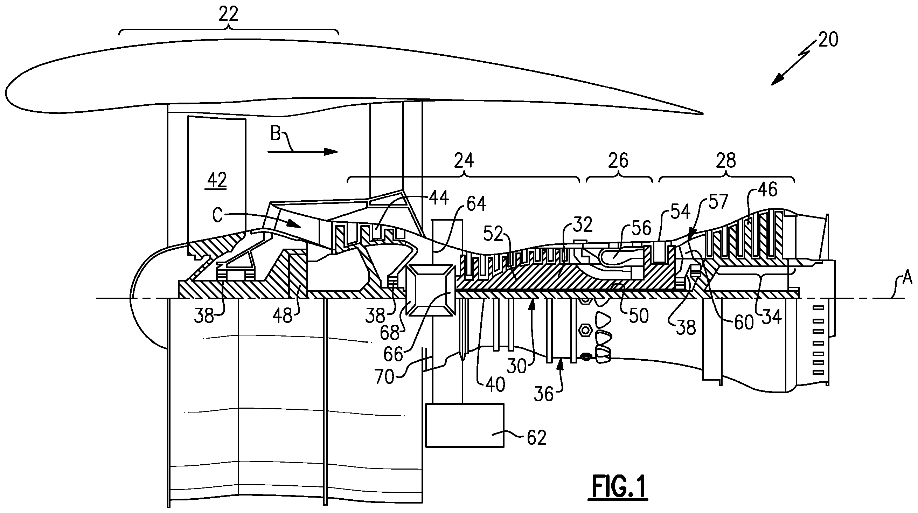

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 58 of the engine static structure 36 is arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10.67 km). The flight condition of 0.8 Mach and 35,000 ft (10.67 km), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft/second (350 m/second).

The example gas turbine engine includes the fan 42 that comprises in one non-limiting embodiment fewer than about twenty-six fan blades. In another non-limiting embodiment, the fan section 22 includes fewer than about twenty fan blades. Moreover, in one disclosed embodiment the low pressure turbine 46 includes no more than about six turbine rotors schematically indicated at 34. In another non-limiting example embodiment the low pressure turbine 46 includes about three turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

The example engine 20 includes a first tower shaft 64 that is engaged to drive the high speed spool 32. The engine 20 further includes a second tower shaft 66 that is engaged to be driven by the low speed spool 30. The low speed spool 30 includes a gear 70 and the high speed spool 32 includes a gear 68. The gear 68 is engaged to the tower shaft 64 and the gear 70 is engaged to the tower shaft 66. Each of the tower shafts 64 and 66 drive portions of an accessory gearbox 62. In one disclosed embodiment the gears 68 and 70 are bevel gears and engage corresponding bevel gears on the corresponding tower shaft 64, 66.

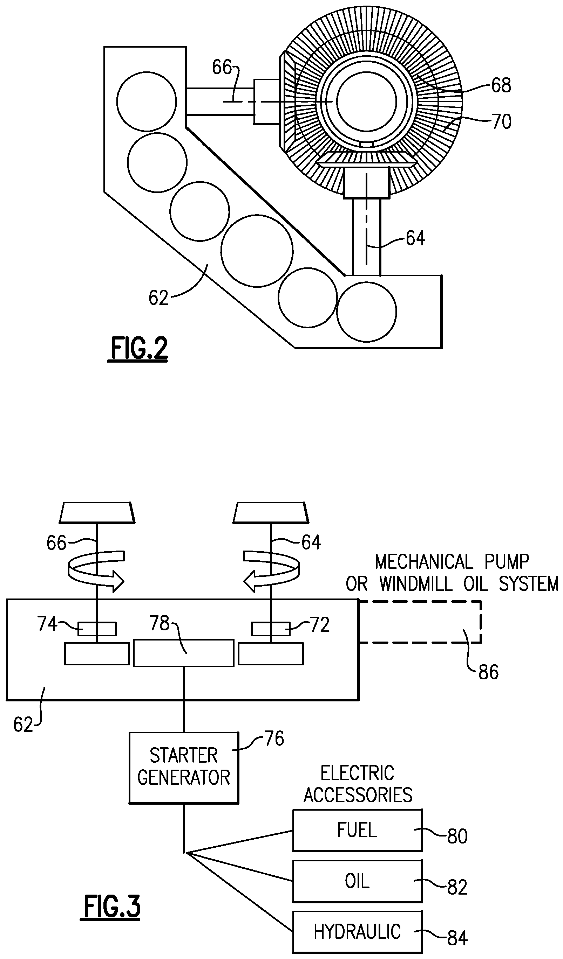

Referring to Figure 2 with continued reference to Figure 1, the example gearbox 62 includes a gear engagement with both the first tower shaft 64 and the second tower shaft 66. The tower shafts 64, 66 are supported within a common accessory gearbox 62 and enable the use of the low speed spool 30 to drive the accessory components within the accessory gearbox 62.

As the core components of the engine 20 become more efficient, larger fans will be utilized and smaller core components such as the high speed spool 30 will become smaller and more efficient. As the core engine components such as the high speed. As the high speed spool 32 components become smaller, the drag caused by the loads that accompany driving the accessory gearbox can alter compressor surge margins and other performance characteristics that detract from the overall engine deficiency.

Starting of an engine requires driving of the high speed spool up to an starting or engine idle speed and therefore a tower shaft is provided to drive the high speed spool. Because the tower shaft is already provided for starting purposes, it was traditionally more expedient to drive the accessory components through the same tower shaft. Accordingly, prior engines included a single tower shaft that was utilized both to drive the high speed spool during starting operations and then to have the high speed spool drive the accessory components while the engine was operating. However, as efficiencies are gained that enable the high speed spool to become smaller, it becomes less desirable to drive the accessory components with the high speed spool.

Accordingly, the example gas turbine engine includes the second tower shaft 66 that is driven by the low speed spool 30 and utilized to drive the accessory components.

Referring to Figure 3 with continued reference to Figure 2, the example gearbox 62 includes a first clutch 72 that is engaged to the first tower shaft 64 coupled to the high speed spool 32. A second clutch 74 is disposed on the second tower shaft 66 driven by the low speed spool 30. Each of the clutches 74 and 72 provide for the transmission of torque in a single direction. The accessory gearbox 62 is engaged to a starter generator 76 that drives a gear 78 that meshes to drive both the first tower shaft 64 and the second tower shaft 66. The starter/generator 76 can be driven to provide electrical power to electric accessories including a fuel pump 80, oil pump 82 and a hydraulic pump 84. The accessory gearbox 62 may also be geared and include power takeoff gearing to provide driving force for mechanical systems or mechanical pumps.

The clutches 72 and 74 are sprag clutches that only allow torque to be transmitted in one direction. When torque is reversed meaning that the driving member becomes the driven member, the clutch will slip and allows the shaft to over speed and rotate independent of the gearbox 62. In this example, the second clutch 74 will allow the low rotor to drive the gearbox 62 and the starter/generator 76 but does not allow the gearbox 62 to drive low speed spool 30. In this example, the clutch 74 is located within the accessory gearbox 62, however, the clutch 74 may be located wherever practical to provide the selective application of torque between the starter/generator, accessory gearbox 62 and the low speed spool 30.

The clutch 72 is configured to allow the starter/generators 76 to drive the high speed spool 32 but not to allow the high speed spool 32 to drive the gearbox 62. In this example, because the high speed spool 32 will rotate much faster than the starter/generator 76, the clutch 72 is configured such that the high speed spool 32 may over speed past the speed of the starter/generator 76 and not transmit torque to the accessory gearbox 62 through the tower shaft 64.

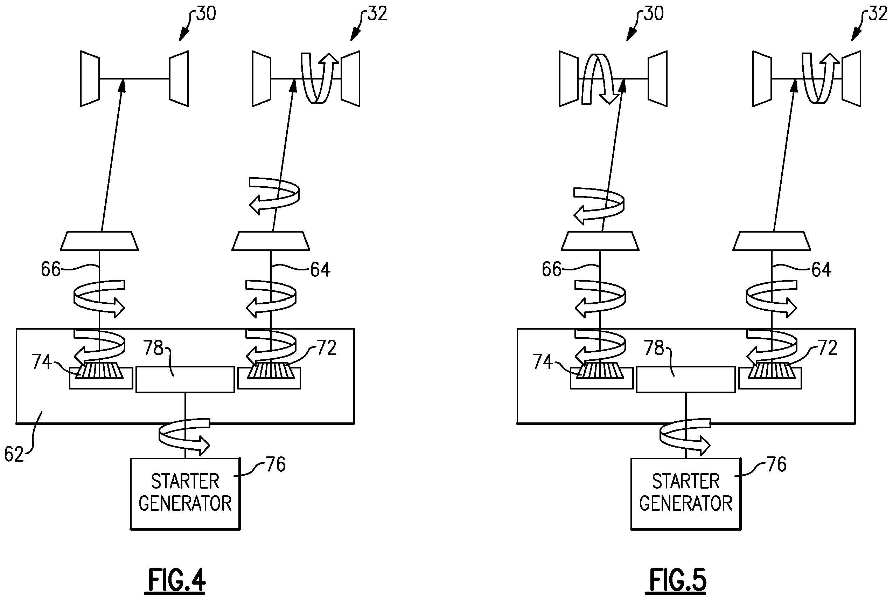

Referring to Figure 4, the example accessory gearbox 62 is shown during an engine starting operation. In this schematic illustration, the starter/generator 76 is shown driving gear 78 within the accessory gearbox 62 that in turn drives the clutch 72 and thereby the tower shaft 64 to drive the high speed spool 32 up to a speed required for starting of the engine. The same gear 78 driven by the starter/generator is also driving the second clutch 74 that is engaged to the second tower shaft 66 driven by the low speed spool 30. However, in this instance, the clutch 74 is not transmitting torque to the low speed spool 30. Accordingly, in the configuration schematically illustrated in Figure 4, only the high spool 32 is turning.

Once the high speed spool 32 has been spun up to operating conditions, it will attain a speed that is much greater than that input by the starter/generator 76 and the tower shaft 64. The tower shaft 64 will continue to rotate in a direction originally provided by the starter/generator 76, however, the high speed spool driven tower shaft 64 is rotating at a much higher speed and therefore spin past the speed input by the starter/generator 76. The clutch 72 will not allow the transmission of this higher torque from the high speed spool 32 into the accessory gearbox 62.

Referring to Figure 5 with continued reference to Figure 4, once the high speed spool 32 has become operational, the low speed spool 30 will also begin to turn. Rotation of the low speed spool 30 will result in turning of the second tower shaft 66. The second tower shaft 66 will, in turn, turn the gear 78 through the clutch 74 which will drive the starter/generator 76. Because the one way clutch 74 is orientated and configured to enable the low speed spool 30 to drive the tower shaft 74 and in turn drive the starter/generator 76, the accessory components engaged to the gearbox 62 along with the starter/generator 76 are turned and operated by the low speed spool 30.

Accordingly, once the engine is running, the starter/generator 76 may produce electric power to drive any number of accessory units, such as the fuel pump 80, hydraulic pump 84 and/or oil pump 82 as illustrated in Figure 3. Moreover, once the engine is operational, the accessory components no matter if they are electrically powered or mechanically powered are driven by the low speed spool 30.

The accessory gearbox 62 may also mechanically drive a pump system for a windmill lubricant system as shown schematically at 86 in Figure 3. A windmill lubricant system 86 provides lubricant flow to the geared architecture when the fan is rotating due to wind and airflow without the engine operating. If the engine is not running and the fan is running, the geared architecture still requires lubricant flow and therefore the example windmill lubricant system provides lubricant flow in the absence of engine operation. The example windmill lubricant system is configured to provide lubricant flow regardless of the direction that the fan is turning.

Accordingly, the example accessory gearbox enables the use of compact high speed spool systems to maximize overall engine efficiencies.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A geared turbofan engine (20) comprising:
a first spool (32) including a first compressor (52) and a first turbine (54), wherein the first compressor (52) is immediately before a combustor (56) and the first turbine (54) is immediately after the combustor (56);
a second spool (30) including at least a second turbine (46) disposed axially aft of the first turbine (54);
a first tower shaft (64) engaged to drive the first spool (32);
a second tower shaft (66) engaged to be driven by the second spool (30);
a starter/generator (76) engaged to drive the first tower shaft (64) and be driven by the second tower shaft (66);
an accessory gear box (62) driven by the second tower shaft (66);
a first one-way mechanical clutch (72) disposed between the first tower shaft (64) and the starter/generator (76), wherein the starter/generator (76) is configured to drive a gear (78) within the accessory gearbox (62), the gear (78) is configured to drive the first clutch (72), and the first clutch (72) is configured to drive the first tower shaft (64) to enable the starter/generator (76) to drive the first spool (32); and
a second one-way mechanical clutch (74) disposed between the second tower shaft (66) and the accessory gear box (62), wherein the same gear (78) is also configured to drive the second one-way mechanical clutch (74), the second one-way mechanical clutch (74) being engaged to the second tower shaft (66), the second one-way mechanical clutch (74) is configured not to transmit torque to the second spool (30) when the gear (78) is driving the second one-way mechanical clutch (74), and the second one-way mechanical clutch (74) is configured to enable the second spool (30) to drive the starter/generator (76) through the same gear (78).

2. The geared turbofan engine (20) as recited in claim 1, including a fan (42) driven by a speed reduction device, wherein the speed reduction device is driven by the second spool (30).

3. The geared turbofan engine (20) as recited in claim 2, including a windmill oil system (86) configured to supply lubricant to the speed reduction device responsive to windmilling of the fan (42).

4. The geared turbofan engine (20) as recited in claims 1 to 3, wherein the second spool (30) includes a second compressor (44) axially forward of the first compressor (52), the second compressor (44) including an operating pressure less than that of the first compressor (52).

5. The geared turbofan engine (20) as recited in any preceding claim, wherein the accessory gearbox (62) includes at least one mechanical pump.

6. A method of operating a geared turbofan engine (20) according to claim 1 comprising:
driving the first spool (32) with the starter/generator (76) through the first tower shaft (64) and the first one-way mechanical clutch (72) to start the engine (20), the starter/generator (76) driving the gear (78) within the accessory gearbox (62), the gear (78) driving the first one-way mechanical clutch (72), and the first one-way mechanical clutch (72) driving the first tower shaft (64);
driving the accessory gear box (62) through the second one-way mechanical clutch (74) with the second tower shaft (66) coupled to the second spool (30) once the engine (20) is started, wherein the same gear (78) also drives the second one-way mechanical clutch (74), the second one-way mechanical clutch (74) being engaged to the second tower shaft (66), the second one-way mechanical clutch (74) does not transmit torque to the second spool (30) when the gear (78) is driving the second one-way mechanical clutch (74), and the second one-way mechanical clutch (74) enables the second spool (30) to drive the starter/generator (76) through the same gear (78); and
decoupling the starter/generator (76) from the first spool (32) once the first spool (32) reaches an engine idle speed.

7. The method as recited in claim 6, wherein decoupling the first one-way mechanical clutch (72) includes rotating the second tower shaft (66) at a speed greater than that of the starter/generator (76).

## Patentansprüche

1. Turbolüftertriebwerk (20) mit Getriebe, umfassend:
eine erste Spule (32), die einen ersten Verdichter (52) und eine erste Turbine (54) umfasst, wobei der erste Verdichter (52) unmittelbar vor einer Brennkammer (56) liegt und die erste Turbine (54) unmittelbar hinter der Brennkammer (56) liegt;
eine zweite Spule (30), die mindestens eine zweite Turbine (46) beinhaltet, die axial hinter der ersten Turbine (54) angeordnet ist;
einen ersten Turmschaft (64), der in Eingriff genommen ist, um die erste Spule (32) anzutreiben;
einen zweiten Turmschaft (66), der in Eingriff genommen ist, um durch die zweite Spule (30) angetrieben zu werden;
einen Starter-Generator (76), der in Eingriff genommen ist, um den ersten Turmschaft (64) anzutreiben und durch den zweiten Turmschaft (66) angetrieben zu werden;
einen Zusatzgetriebekasten (62), der durch den zweiten Turmschaft (66) angetrieben wird;
eine erste mechanische Einwegkupplung (72), die zwischen dem ersten Turmschaft (64) und dem Starter-Generator (76) angeordnet ist, wobei der Starter-Generator (76) dazu konfiguriert ist, ein Getriebe (78) innerhalb des Zusatzgetriebekastens (62) anzutreiben, wobei das Getriebe (78) dazu konfiguriert ist, die erste Kupplung (72) anzutreiben, und wobei die erste Kupplung (72) dazu konfiguriert ist, den ersten Turmschaft (64) anzutreiben, um das Antreiben der ersten Spule (32) durch den Starter-Generator (76) zu ermöglichen; und
eine zweite mechanische Einwegkupplung (74), die zwischen dem zweiten Turmschaft (66) und dem Zusatzgetriebekasten (62) angeordnet ist, wobei dasselbe Getriebe (78) auch dazu konfiguriert ist, die zweite mechanische Einwegkupplung (74) anzutreiben, wobei die zweite mechanische Einwegkupplung (74) mit dem zweiten Turmschaft (66) in Eingriff genommen ist, wobei die zweite mechanische Einwegkupplung (74) dazu konfiguriert ist, kein Drehmoment an die zweite Spule (30) zu übermitteln, wenn das Getriebe (78) die zweite mechanische Einwegkupplung (74) antreibt, und wobei die zweite mechanische Einwegkupplung (74) dazu konfiguriert ist, das Antreiben des Starter-Generators (76) durch dasselbe Getriebe (78) hindurch durch die zweite Spule (30) zu ermöglichen.

2. Turbolüftertriebwerk (20) mit Getriebe nach Anspruch 1, das einen Lüfter (42) beinhaltet, der durch eine Drehzahluntersetzungsvorrichtung angetrieben wird, wobei die Drehzahluntersetzungsvorrichtung durch die zweite Spule (30) angetrieben wird.

3. Turbolüftertriebwerk (20) mit Getriebe nach Anspruch 2, das ein Autorotations-Öl-System (86) beinhaltet, das dazu konfiguriert ist, der Drehzahluntersetzungsvorrichtung als Reaktion auf die Autorotation des Lüfters (42) Schmiermittel zuzuführen.

4. Turbolüftertriebwerk (20) mit Getriebe nach Anspruch 1 bis 3, wobei die zweite Spule (30) einen zweiten Verdichter (44) axial vor dem ersten Verdichter (52) beinhaltet, wobei der zweite Verdichter (44) einen Betriebsdruck beinhaltet, der niedriger als jener des ersten Verdichters (52) ist.

5. Turbolüftertriebwerk (20) mit Getriebe nach einem der vorhergehenden Ansprüche, wobei der Zusatzgetriebekasten (62) mindestens eine mechanische Pumpe beinhaltet.

6. Verfahren zum Betreiben eines Turbolüftertriebwerks (20) mit Getriebe nach Anspruch 1, umfassend:
Antreiben der ersten Spule (32) mit dem Starter-Generator (76) durch den ersten Turmschaft (64) und die erste mechanische Einwegkupplung (72) hindurch, um das Triebwerk (20) zu starten, wobei der Starter-Generator (76) das Getriebe (78) innerhalb des Zusatzgetriebekastens (62) antreibt, wobei das Getriebe (78) die erste mechanische Einwegkupplung (72) antreibt, und wobei die erste mechanische Einwegkupplung (72) den ersten Turmschaft (64) antreibt;
Antreiben des Zusatzgetriebekastens (62) durch die zweite mechanische Einwegkupplung (74) hindurch mit dem zweiten Turmschaft (66), der an die zweite Spule (30) gekoppelt ist, sobald das Triebwerk (20) gestartet ist, wobei dasselbe Getriebe (78) auch die zweite mechanische Einwegkupplung (74) antreibt, wobei die zweite mechanische Einwegkupplung (74) mit dem zweiten Turmschaft (66) in Eingriff genommen ist, wobei die zweite mechanische Einwegkupplung (74) kein Drehmoment an die zweite Spule (30) übermittelt, wenn das Getriebe (78) die zweite mechanische Einwegkupplung (74) antreibt, und die zweite mechanische Einwegkupplung (74) das Antreiben des Starter-Generators (76) durch dasselbe Getriebe (78) hindurch durch die zweite Spule (30) ermöglicht; und
Entkoppeln des Starter-Generators (76) von der ersten Spule (32), sobald die erste Spule (32) eine Leerlaufdrehzahl des Triebwerks erreicht.

7. Verfahren nach Anspruch 6, wobei das Entkoppeln der ersten mechanischen Einwegkupplung (72) das Rotieren des zweiten Turmschafts (66) bei einer Drehzahl beinhaltet, die größer als jene des Starter-Generators (76) ist.

## Revendications

1. Turboréacteur à double flux à engrenages (20) comprenant :
un premier corps (32) comportant un premier compresseur (52) et une première turbine (54), dans lequel le premier compresseur (52) se trouve immédiatement avant une chambre de combustion (56) et la première turbine (54) se trouve immédiatement après la chambre de combustion (56) ;
un second corps (30) comportant au moins une seconde turbine (46) disposée axialement à l'arrière de la première turbine (54) ;
un premier arbre de tour (64) en prise pour entraîner le premier corps (32) ;
un second arbre de tour (66) en prise pour être entraîné par le second corps (30) ;
un démarreur/générateur (76) en prise pour entraîner le premier arbre de tour (64) et être entraîné par le second arbre de tour (66) ;
une boîte de vitesses accessoire (62) entraînée par le second arbre de tour (66) ;
un premier embrayage mécanique unidirectionnel (72) disposé entre le premier arbre de tour (64) et le démarreur/générateur (76), dans lequel le démarreur/générateur (76) est conçu pour entraîner un engrenage (78) à l'intérieur de la boîte de vitesses accessoire (62), l'engrenage (78) est conçu pour entraîner le premier embrayage (72), et le premier embrayage (72) est conçu pour entraîner le premier arbre de tour (64) pour permettre au démarreur/générateur (76) d'entraîner le premier corps (32) ; et
un second embrayage mécanique unidirectionnel (74) disposé entre le second arbre de tour (66) et la boîte de vitesses accessoire (62), dans lequel le même engrenage (78) est également conçu pour entraîner le second embrayage mécanique unidirectionnel (74), le second embrayage mécanique unidirectionnel (74) étant en prise sur le second arbre de tour (66), le second embrayage mécanique unidirectionnel (74) est conçu pour ne pas transmettre de couple au second corps (30) lorsque l'engrenage (78) entraîne le second embrayage mécanique unidirectionnel (74) et le second embrayage mécanique unidirectionnel (74) est conçu pour permettre au second corps (30) d'entraîner le démarreur/générateur (76) à travers le même engrenage (78).

2. Turboréacteur à double flux à engrenages (20) selon la revendication 1, comportant un ventilateur (42) entraîné par un dispositif de réduction de vitesse, dans lequel le dispositif de réduction de vitesse est entraîné par le second corps (30).

3. Turboréacteur à double flux à engrenages (20) selon la revendication 2, comportant un système d'huile d'éolienne (86) conçu pour fournir du lubrifiant au dispositif de réduction de vitesse en réponse à la rotation libre du ventilateur (42).

4. Turboréacteur à double flux à engrenages (20) selon les revendications 1 à 3, dans lequel le second corps (30) comporte un second compresseur (44) axialement en avant du premier compresseur (52), le second compresseur (44) comportant une pression de fonctionnement inférieure à celle du premier compresseur (52).

5. Turboréacteur à double flux à engrenages (20) selon une quelconque revendication précédente, dans lequel la boîte de vitesses accessoire (62) comporte au moins une pompe mécanique.

6. Procédé de fonctionnement d'un turboréacteur à double flux à engrenages (20) selon la revendication 1, comprenant :
l'entraînement du premier corps (32) avec le démarreur/générateur (76) à travers le premier arbre de tour (64) et le premier embrayage mécanique unidirectionnel (72) pour démarrer le moteur (20), le démarreur/générateur (76) entraînant l'engrenage (78) à l'intérieur de la boîte de vitesses accessoire (62), l'engrenage (78) entraînant le premier embrayage mécanique unidirectionnel (72) et le premier embrayage mécanique unidirectionnel (72) entraînant le premier arbre de tour (64) ;
l'entraînement de la boîte de vitesses accessoire (62) à travers le second embrayage mécanique unidirectionnel (74) avec le second arbre de tour (66) couplé au second corps (30) une fois que le moteur (20) est démarré, dans lequel le même engrenage (78) entraîne également le second embrayage mécanique unidirectionnel (74), le second embrayage mécanique unidirectionnel (74) étant en prise sur le second arbre de tour (66), le second embrayage mécanique unidirectionnel (74) ne transmet pas de couple au second corps (30) lorsque l'engrenage (78) entraîne le second embrayage mécanique unidirectionnel (74), et le second embrayage mécanique unidirectionnel (74) permet au second corps (30) d'entraîner le démarreur/générateur (76) à travers le même engrenage (78) ; et
le découplage du démarreur/générateur (76) du premier corps (32) une fois que le premier corps (32) atteint un régime de ralenti du moteur.

7. Procédé selon la revendication 6, dans lequel le découplage du premier embrayage mécanique unidirectionnel (72) comporte la rotation du second arbre de tour (66) à une vitesse supérieure à celle du démarreur/générateur (76).
